# EUROPÄISCHE PATENTSCHRIFT

(11) **EP 3 417 394 B1**
(45) Veröffentlichungstag und Bekanntmachung des Hinweises auf die Patenterteilung: **17.04.2024**
(21) Anmeldenummer: 17709926.4
(22) Anmeldetag: 28.02.2017
(51) Int. Cl.: G06F 21/34, G06F 21/82, G06F 3/02, G06F 1/32

(54) **ZUGANGSKONTROLLE**
ACCESS CONTROL
CONTRÔLE D'ACCÈS

(30) Priorität: 29.03.2016 DE 102016205091
(43) Veröffentlichungstag der Anmeldung: 26.12.2018
(73) Patentinhaber: Siemens Aktiengesellschaft, 80333 München (DE)
(72) Erfinder: DREGER, Holger, 81241 München (DE); MÜNZ, Gerhard, 81735 München (DE)
(74) Vertreter: Siemens Patent Attorneys
(86) Internationale Anmeldenummer: PCT/EP2017/054600
(87) Internationale Veröffentlichungsnummer: WO 2017/167519

(56) Entgegenhaltungen:
- US-A1- 2006 136 717
- US-A1- 2012 030 752
- US-A1- 2012 323 717

## Beschreibung

Die Erfindung betrifft eine Vorrichtung zum Freischalten eines Gerätes zur Bereitstellung einer Zugangskontrolle.

Für dieses Problem sind die folgenden Dokumente aus dem Stand der Technik relevant: US2006/136717A1, US2012/323717A1, US2012/030752A1. Darin wird die Freischaltung eines Gerätes mit verschiedenen kyptographischen Mitteln kontrolliert.

Durch einen zunehmenden Einsatz von IT-basierten Geräten, nachfolgend als IT-System bezeichnet, im Arbeitsalltag ist ein Bediener häufig damit konfrontiert, dass er während seines Arbeitstages an mehreren IT-Systemen, wie beispielsweise Personal Computer, Roboteranlagen, Steuergeräte in der Automatisierungsanlage, Förderbänder und weitere mittels IT-Technik betriebener Arbeitsgeräte, arbeitet. Um eine Sicherheit zur unberechtigten Bedienung dieser IT-Systeme zu erhöhen, wird heute standardmäßig ein Passwort bei einem Benutzer vor einer eigentlichen Nutzung des IT-Systems angefragt. Dieses Passwort kann dann über die Tastatur an das jeweilige IT-System eingegeben werden.

Es zeigt sich jedoch, dass Benutzer, die die IT-Systeme häufiger wechseln, oftmals dauerhaft mit ihrem Passwort an dem jeweiligen IT-System eingeloggt bleiben, wodurch die durch das Passwort ursprünglich initiierte Sicherheit kompromittiert wird.

Ein Umstellen von bestehenden IT-Systemen zur Unterstützung weiterer oder anderer Authentifizierungsmaßnahmen als die manuelle Passworteingabe über eine Tastatur bedarf oft einer softwaremäßigen Anpassung auf dem jeweiligen IT-System. Gerade bei älteren IT-Systemen oder IT-Systemen, die in engem Datenaustausch mit weiteren IT-Systemen stehen, kann eine derartige Software-basierte Anpassung schwierig sein, möglichweise technisch nicht umsetzbar sein, zu einer Instabilität des Betriebs des IT-Systems führen oder Haftungsausschlüsse des Lieferanten implizieren.

Daher stellt sich die Aufgabe, eine Vorrichtung zum Freischalten eines Gerätes, bereitzustellen, welche zum einen das Freischalten des Gerätes durch einen Benutzer in einfacher und leicht anwendbarer Weise bereitstellt und eine Gefährdung des IT-Systems durch den Einsatz der Vorrichtung vermeidet.

Diese Aufgabe wird durch den unabhängigen Anspruch 1 gelöst. Weiterbildungen der Erfindung sind den abhängigen Ansprüchen zu entnehmen.

Die Erfindung betrifft eine Vorrichtung zum Freischalten eines Geräts, wobei das Gerät eine Recheneinheit und zumindest eine, mit der Recheneinheit elektrisch verbindbare, Bedieneinheit aufweist,
gekennzeichnet dadurch, dass die Vorrichtung folgende Einheiten aufweist:
a) Erste Empfangseinheit zum Empfangen von elektrischen Signalen der zumindest einen Bedieneinheit;
b) Sendeeinheit zum Übertragen der elektrischen Signale an die Recheneinheit;
c) Zweite Empfangseinheit zum Empfangen zumindest einer Zugangsnachricht übertragen mittels eines elektromagnetischen Signals;
d) Autorisierungseinheit zum Erzeugen eines Schaltsignals, falls eine Prüfung der Zugangsnachricht ergibt, dass mittels der Zugangsnachricht das Freischalten des Geräts erlaubt ist;
e) Freischalteeinheit zum Freischalten einer Übertragung der elektrischen Signale von der ersten Empfangseinheit zu der Sendeeinheit in Abhängigkeit von dem Schaltsignal.

Die Vorrichtung zeigt den Vorteil, dass für ein bestehendes IT-System, bspw. in Form des Geräts, eine Verbesserung der Zugangssicherheit zum Gerät erreicht werden kann, ohne dass eine Software-technische Veränderung an dem Gerät vorgenommen werden muss. Ferner kann die Vorrichtung ohne negative Auswirkung auf das Gerät in Betrieb genommen werden. Ein weiterer Vorteil der Erfindung liegt darin, dass diese mit wenig Aufwand realisiert und in Betrieb genommen werden kann. Zudem kann durch die Vorrichtung auch ein mehrstufiges Sicherheitskonzept realisiert werden. Dabei kann es zumindest zwei unterschiedliche Nachrichten geben, die von der zweiten Empfangseinheit empfangbar und durch die Autorisierungseinheit auswertbar sind. So kann bei Empfang einer ersten Zugangsnachricht ein Zugang nur zu einer spezifischen Bedieneinheit gewährt werden, z.B. nur zur Tatstatur, und bei Empfang einer zweiten Zugangsnachricht ein Zugang nur mehreren Bedieneinheit wie Tastatur und Maus ermöglicht werden. Beispielsweise ist durch Bedienung der Maus noch Bedienmöglichkeiten an der Recheneinheit gegeben, die durch die Tastatur nicht möglich sind.

In einer vorzugsweisen Weiterbildung der Erfindung ist die zumindest eine Bedieneinheit als Tastatur oder Maus ausgebildet. Hierdurch können sehr gebräuchliche Bedieneinheiten durch die Vorrichtung sicherheitstechnisch gegen Missbrauch abgesichert werden.

In einer vorzugsweise Ausgestaltung der Erfindung ist die erste Empfangseinheit ausgebildet, die elektrischen Signale (a)mittels eines elektrisch leitenden Kabels (KA1), wobei die elektrischen Signale (ESIG) insbesondere auf Basis eines Standards USB (USB-Universal Serial Bus), PS/2 oder RS-232 codiert sind, oder (b)drahtlos zu empfangen. Hierdurch können preiswerte und sehr verbreitete Bedieneinheiten mit der Vorrichtung eingesetzt und gegen Missbrauch abgesichert werden.

In einer optionalen Weiterbildung der Erfindung ist die Sendeeinheit mit der Recheneinheit über ein weiteres elektrisch leitendes Kabel oder drahtlos zum Austausch der elektrischen Signale, insbesondere gemäß einem Standard USB (USB-Universal Serial Bus), PS/2 oder RS-232, verbindbar. Hierdurch ist die Vorrichtung an eine große Anzahl von Recheneinheiten nutzbar, da viele der gegenwärtig gängigen IT-Systeme Schnittstellen in der beanspruchten Art und Weise bereitstellen. Zudem kann damit eine Realisierung der Vorrichtung kostengünstig ermöglicht werden.

In einer vorzugweisen Weiterbildung der Erfindung weist die Vorrichtung ferner das weitere Kabel auf, das untrennbar mit der Vorrichtung verbunden ist. Durch die untrennbare Verbindung des weiteren Kabels mit der Vorrichtung wird die Manipulation der Vorrichtung weiter erschwert. Unter untrennbar ist im Rahmen dieser Schrift im Allgemeinen zu verstehen, dass das weitere Kabel nicht mittels einer trennbaren Steckverbindung mit der Vorrichtung verbunden ist, sondern zum Trennen des weiteren Kabels dieses beispielsweise durchgeschnitten werden muss.

Eine weitere Steigerung der Sicherheit kann in einer optionalen Weiterbildung der Vorrichtung dadurch erreicht werden, dass die Vorrichtung zumindest teilweise innerhalb der Hülle angeordnet ist, wobei und die Recheneinheit innerhalb der Hülle angeordnet ist. Hierdurch wird ein Zugriff auf die Vorrichtung sehr erschwert, dass zunächst die Hülle, beispielweise ein Schaltschrank oder ein Rechnergehäuse, geöffnet werden muss, um eine Manipulation an der Vorrichtung vornehmen zu können.

In einer alternativen Ausführungsform der Erfindung kann die Vorrichtung zumindest teilweise innerhalb der zumindest einen Bedieneinheit angeordnet sein. Dies ist vorteilhaft, da hierdurch eine kompakte Bauform aus Bedieneinheit und Vorrichtung erzielbar ist. Ferner wird hierdurch eine Manipulation erschwert, da das Kabel zwischen der ersten Empfangseinheit der Vorrichtung und der Bedieneinheit in dem Gehäuse der Bedieneinheit angeordnet ist und dadurch für einen Angreifer die Manipulation des Kabels erschwert wird. Ein weiterer Vorteil liegt darin begründet, dass eine Installation der Vorrichtung erleichtert wird, da ein Benutzer die Bedieneinheit mit der Vorrichtung installiert, wie eine gewöhnliche Bedieneinheit, z.B. eine Tastatur oder Maus.

Die Erfindung und ihre Weiterbildungen werden anhand von Zeichnungen näher erläutert Im Einzelnen zeigen:
- Figur 1: einen Aufbau der Vorrichtung
- Figur 2: ein Ausführungsbeispiel der Erfindung

Elemente mit gleicher Funktion und Wirkungsweise sind in den Figuren mit denselben Bezugszeichen versehen.

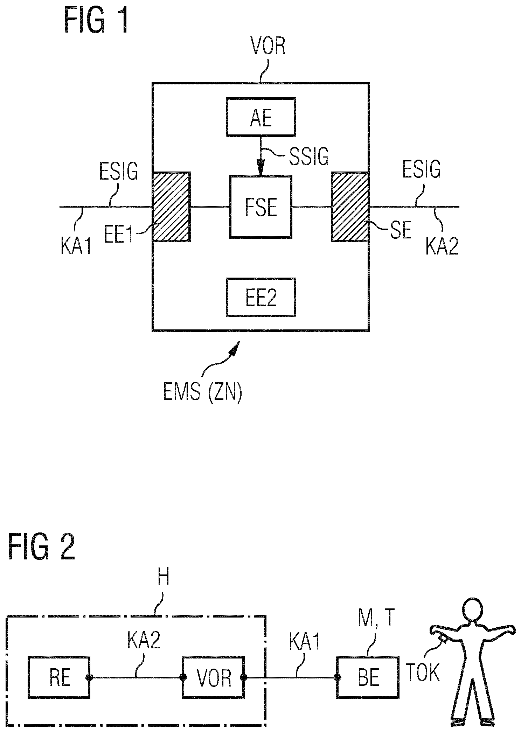

Figur 1 zeigt einen exemplarischen Aufbau der Vorrichtung VOR. Die Vorrichtung empfängt mittels einer ersten Empfangseinheit EE1 ein elektrisches Signal ESIG zum Beispiel von zumindest einer Bedieneinheit BE. Die Bedieneinheit BE ist beispielsweise als Tastatur oder Maus ausgestaltet. So kann die erste Empfangseinheit EE1 beispielsweise in Form eines USB-Ports (USB - Universal Seriell Bus) oder eines PS/2-Ports ausgestaltet sein, der den dazu passenden Stecker eines Kabels KA1, welches mit der Bedieneinheit verbunden ist, elektrisch aufnehmen kann. Die Signale der Bedieneinheit, zum Beispiel die x-y-Koordinaten oder ein jeweiliger Tastendruck der Maus, können über das Kabel KA1 als elektrisches Signal ESIG durch die Empfangseinheit EE1 empfangen werden.

Auf der rechten Seite der Vorrichtung VOR ist eine Sendeeinheit SE abgebildet, die zur Übertragung des elektrischen Signals ESIG an eine Recheneinheit RE ausgebildet ist. So kann die Sendeeinheit der Vorrichtung eine USB-Buchse oder PS/2 Buchse aufweisen, in der ein weiteres Kabel KA2 zwischen der Vorrichtung und der Recheneinheit zum Übertragen des elektrischen Signals ausgestaltet sein kann.

Innerhalb der Vorrichtung ist eine Freischalteeinheit FSE angeordnet, die in Abhängigkeit von einem Schaltsignal SSIG das elektrische Signal von der ersten Empfangseinheit EE1 zur Sendeeinheit SE und optional auch in die andere Richtung übertagen kann.

Das Schaltsignal SSIG wird durch eine Autorisierungseinheit AE erzeugt, die ein von einer zweiten Empfangseinheit EE2, zum Empfang zumindest einer Zugangsnachricht ZN ausgebildet ist, und übermittelt. Die zweite Empfangseinheit EE2 empfängt die Zugangsnachricht ZN mittels eines elektromagnetischen Signals EMS, das beispielsweise durch einen Token, der sich an der Kleidung des Benutzers befindet, abgesendet wird, sobald sich der Benutzer in der Nähe der Vorrichtung VOR befindet.

Figur 2 zeigt ein Ausführungsbeispiel der Erfindung. Hierbei ist die Vorrichtung in einer Hülle, wie einem abgeschlossenen Schaltschrank, in dem auch die Recheneinheit untergebracht ist, eingebaut. Alternativ kann die Vorrichtung auch in einer Hülle, wie einem Gehäuse, das die Recheneinheit umgibt, untergebracht sein. In vorteilhafterweise kann ein Nutzer ohne den Schaltschrank oder das Gehäuse zu öffnen seine Tastatur und seine Maus an die Vorrichtung anstecken, z.B. über eine kleine Öffnung in der Hülle. Innerhalb der Hülle ist das weitere Kabel KA2 zwischen der Sendeeinheit und der für die Tastatur bzw. Maus zuständigen Buchse der Recheneinheit elektrisch verbunden. Zur Vermeidung einer Manipulation sollte das weitere Kabel KA2 derart im Gehäuse angeordnet sein, dass es von außen nicht manipulierbar ist, bspw. von der Recheneinheit nicht entfernt werden kann.

Eine Person trägt einen Token TOK am Arm. Der Token sendet das elektromagnetische Signal EMS mit einer Zugangsnachricht ZN aus. Dieser Token kann zusammen mit der zweiten Empfangseinheit die Zugangsnachricht ZN in Form einer RFID Technologie (RFID - radio frequency identification), siehe [1], übertragen. Vorzugsweise ist die Zugangsnachricht ZN erst in unmittelbarer Nähe zur Vorrichtung oder Bedieneinheit, beispielsweise bei 3 Meter oder weniger Abstand, fehlerfrei durch die zweite Empfangseinheit empfangbar. Vorzugsweise wird das Token erst aktiv, wenn es in die Nähe der Vorrichtung gebracht wird. Das Token kann als Transponder aufgebaut sein, der nicht von sich aus sendet, sondern, wenn er von der zweiten Empfangseinheit drahtlos mit Energie versorgt wird. Das Token kann in Kartenform ausgebildet sein, welches der Bediener als Teil seines Firmenausweises an seiner Kleidung befestigt. In einer anderen Ausführungsform ist das Token als Anhänger für einen Schlüsselanhänger ausgebildet. Desweiteren kann das Token in einer Arbeitskleidung, bzw. einem Kittel, eingenäht oder aufgebracht, bspw. aufgebügelt, sein.

Falls die Person mit dem Token sich der Bedieneinheit und/oder Vorrichtung nähert, wird die Zugangsnachricht ZN durch die zweite Empfangseinheit fehlerfrei empfangen und an die Autorisierungseinheit AE zur Prüfung weitergereicht. Kann die Autorisierungseinheit anhand der Zugangsnachricht erkennen, dass der Benutzer für den Zugang zu der Recheneinheit zugelassen ist, so sendet diese das Schaltsignal SSIG an die Freischalteeinheit FSE, die die erste Empfangseinheit und die Sendeeinheit zum Austausch von elektrischen Signalen elektrisch verbindet.

Hiernach ist der Benutzer in der Lage in Abhängigkeit von dem Zustand des Rechners entweder ohne Eingabe oder mit Eingabe eines Passwortes Informationen zwischen Tastatur und Maus mit dem Rechner auszutauschen. Im Allgemeinen gilt für alle Ausführungsformen der Erfindungen, dass die erste Empfangseinheit und die Sendeeinheit jeweils elektrische Signale empfangen und/oder senden kann.

Unter elektrischen Signalen sind im Allgemeinen Spannungsversorgungssignale wie 5V oder 12V, wie auch Signale zur Übertragung von Informationen oder ein Massesignal zu verstehen. Dazu können die erste Empfangseinheit und/oder die Sendeeinheit mehrere Kontakte aufweisen, um das elektrische Signal über mehrere Adern des Kabels bzw. des weiteren Kabels zu übertragen. Ferner kann im Allgemeinen das elektrische Signal von der ersten Empfangseinheit zu der Sendeeinheit und optional auch in umgekehrter Richtung durch die Freischalteeinheit einer Protokollumsetzung unterzogen werden. Beispielsweise ist das elektrische Signal zwischen Rechner und Vorrichtung gemäß USB Spezifikation 1.1 und zwischen Vorrichtung und Bedieneinheit gemäß RS-232 (RS-232: Standard für serielle Übertragung von Kommunikationsdaten, Siehe Standard TIA-232-F) kodiert. Die Freischalteeinheit setzt in diesem Fall die Signale der USB1.1 Spezifikation in die des RS-232 Standards um und ggfs. auch umgekehrt.

In einer Abwandlung dieses Ausführungsbeispiels ist das eine Ende des weiteren Kabels KA2 untrennbar mit der Vorrichtung verbunden. Das andere Ende des weiteren Kabels ist mit der Recheneinheit derart verbunden, dass dieses durch einen Nutzer nicht entfernt werden kann. So kann die Hülle derart gestaltet sein, dass das weitere Kabel durch die Hülle durchführbar ist, jedoch der Nutzer nicht an die Steckverbindung des weiteren Endes des Kabels mit der Recheneinheit greifen kann. Alternativ ist das andere Ende des weiteren Kabels auch untrennbar mit dem Rechner verbunden, wobei sich in diesem Fall die Hülle über die Steckverbindung des anderen Endes des Kabels erstreckt.

In einer weiteren Ausführungsform der Erfindung ist die Vorrichtung Teil der Bedieneinheit. So kann die Vorrichtung im Gehäuse der Tastatur oder der Maus eingebracht sein, wobei das weitere Kabel untrennbar mit der Vorrichtung oder dem Gehäuse der Bedieneinheit ausgeführt sein kann. In einer weiteren Ausgestaltung dieser Ausführungsform kann statt dem weiteren Kabel KA2 die Verbindung zwischen der Vorrichtung und der Recheneinheit auch in drahtloser Form ausgestaltet sein, wobei eine Kopplung bzgl. Authentizität der Bedieneinheit mit der Recheneinheit vorgegeben ist. So kann das elektrische Signal verschlüsselt sein, so dass lediglich die Bedieneinheit und der Rechner dieses entschlüsseln und richtig interpretieren können.

Die einzelnen Einheiten der Vorrichtung können über einen Bus zwecks Austausch von Nachrichten mit einander verbunden sein. Ferner können die Ausgestaltung und die Ausführung der einzelnen Einheiten zumindest teilweise in Software, Hardware oder in einer Kombination aus Soft- und Hardware erfolgen. Zur Ausgestaltung und Ausführung kann ein Prozessor, wie beispielsweise ein Microcontroller, eine Koordination der einzelnen Einheiten übernehmen.

Die Erfindung und ihre Weiterbildungen sind unter Anderem in sicherheitskritschen Anlagen, wie einem Rechenzentrum, einem Umspannwerk eines Energieversorgers, in Produktionsanlagen oder auch in einem Krankenhaus einsetzbar.

### Literaturangaben:

[1] Radio-Frequency Indentification (RFID), siehe in Wikipedia https://en.wikipedia.org/wiki/Radio-frequency_identification

## Patentansprüche

1. Vorrichtung (VOR) zum Freischalten eines Geräts, wobei das Gerät eine Recheneinheit (RE) und zumindest eine, mit der Recheneinheit (RE) elektrisch verbindbare, Bedieneinheit (BE) aufweist,
**gekennzeichnet dadurch, dass** die Vorrichtung (VOR) folgende Einheiten aufweist:
a) eine erste Empfangseinheit (EE1) zum Empfangen von elektrischen Signalen (ESIG) der zumindest einen Bedieneinheit (BE), wobei die erste Empfangseinheit (EE1) insbesondere ausgebildet ist, die elektrischen Signale (ESIG) mittels eines elektrisch leitenden Kabels (KA1) oder drahtlos zu empfangen;
b) eine Sendeeinheit (SE) zum Übertragen der elektrischen Signale (ESIG) der zumindest einen Bedienheit (BE) an die Recheneinheit (RE);
c) eine zweite Empfangseinheit (EE2) zum Empfangen zumindest einer Zugangsnachricht (ZN) übertragen mittels eines elektromagnetischen Signals (EMS) und ausgesendet von einem Token (TOK);
d) eine Autorisierungseinheit (AE) zum Erzeugen eines Schaltsignals (SSIG), falls eine Prüfung der von dem Token (TOK) ausgesandten Zugangsnachricht (ZN) ergibt, dass mittels der Zugangsnachricht (ZN) das Freischalten des Geräts erlaubt ist; und
e) eine Freischalteeinheit (FSE) zum Freischalten der Übertragung der elektrischen Signale (ESIG) von der ersten Empfangseinheit (EE1) zu der Sendeeinheit (SE) in Abhängigkeit von dem erzeugten Schaltsignal (SSIG), wobei
- die Sendeeinheit (SE) mit der Recheneinheit (RE) über ein weiteres elektrisch leitendes Kabel (KA2) zum Senden der elektrischen Signale (ESIG) verbunden ist und
- die Vorrichtung (VOR) ferner das weitere Kabel (KA2), das untrennbar mit der Vorrichtung (VOR) verbunden ist, aufweist.

2. Vorrichtung (VOR) gemäß Anspruch 1,
**gekennzeichnet dadurch, dass**
die zumindest eine Bedieneinheit (BE) als Tastatur oder Maus ausgebildet ist.

3. Vorrichtung (VOR) nach den Ansprüchen 1 mit 2,
**gekennzeichnet dadurch, dass**
die Vorrichtung (VOR) zumindest teilweise innerhalb einer Hülle (H) angeordnet ist und die Recheneinheit (RE) innerhalb der Hülle (H) angeordnet ist.

4. Vorrichtung (VOR) nach einem der Ansprüche 1 bis 3,
**gekennzeichnet dadurch, dass**
die Vorrichtung (VOR) zumindest teilweise innerhalb der zumindest einen Bedieneinheit (BE) angeordnet ist.

5. Vorrichtung (VOR) nach einem oder mehreren der Ansprüche 1 bis 4,
**dadurch gekennzeichnet, dass** das Token (TOK) derart ausgebildet ist, dass es erst aktiv wird, wenn es in die Nähe der Vorrichtung (VOR) gebracht wird.

6. Vorrichtung (VOR) nach Anspruch 5, **dadurch gekennzeichnet,**
**dass** das Token (TOK) ausgebildet ist, die Zugangsnachricht (ZN) als RFID-Signal zu senden.

## Claims

1. Apparatus (VOR) for unlocking a device, the device having a computing unit (RE) and at least one operator control unit (BE), which is electrically connectable to the computing unit (RE), **characterized in that** the apparatus (VOR) has the following units:
a) a first reception unit (EE1) for receiving electrical signals (ESIG) from the at least one operator control unit (BE), the first reception unit (EE1) being in particular designed to receive the electrical signals (ESIG) by means of an electrically conductive cable (KA1) or wirelessly;
b) a transmission unit (SE) for transmitting the electrical signals (ESIG) of the at least one operator control unit (BE) to the computing unit (RE);
c) a second reception unit (EE2) for receiving at least one access message (ZN) transmitted by means of an electromagnetic signal (EMS) and sent out by a token (TOK);
d) an authorization unit (AE) for generating a switching signal (SSIG) if a check on the access message (ZN) sent out by the token (TOK) reveals that unlocking of the device is permitted by means of the access message (ZN); and
e) an unlocking unit (FSE) for unlocking the transmission of the electrical signals (ESIG) from the first reception unit (EE1) to the transmission unit (SE) on the basis of the generated switching signal (SSIG), wherein
- the transmission unit (SE) is connected to the computing unit (RE) via a further electrically conductive cable (KA2) for the purpose of sending the electrical signals (ESIG), and
- the apparatus (VOR) additionally has the further cable (KA2), which is inseparably connected to the apparatus (VOR).

2. Apparatus (VOR) according to Claim 1,
**characterized in that**
the at least one operator control unit (BE) is in the form of a keyboard or mouse.

3. Apparatus (VOR) according to Claims 1 and 2, **characterized in that**
at least part of the apparatus (VOR) is arranged inside a casing (H) and the computing unit (RE) is arranged inside the casing (H) .

4. Apparatus (VOR) according to one of Claims 1 to 3, **characterized in that**
at least part of the apparatus (VOR) is arranged inside the at least one operator control unit (BE).

5. Apparatus (VOR) according to one or more of Claims 1 to 4, **characterized in that** the token (TOK) is designed such that it does not become active until it is brought close to the apparatus (VOR).

6. Apparatus (VOR) according to Claim 5, **characterized in that** the token (TOK) is designed to send the access message (ZN) as an RFID signal.

## Revendications

1. Dispositif (VOR) permettant d'activer un appareil, ledit appareil comprenant une unité de calcul (RE) et au moins une unité de commande (BE) pouvant être reliée de manière électrique à l'unité de calcul (RE),
**caractérisé en ce que** le dispositif (VOR) présente les unités suivantes :
a) une première unité de réception (EE1) permettant de recevoir des signaux électriques (ESIG) de la au moins une unité de commande (BE), dans lequel la première unité de réception (EE1) est en particulier conçue afin de recevoir les signaux électriques (ESIG) sans fil ou au moyen d'un câble électriquement conducteur (KA1) ;
b) une unité d'émission (SE) permettant de transmettre des signaux électriques (ESIG) de la au moins une unité de commande (BE) vers l'unité de calcul (RE) ;
c) une seconde unité de réception (EE2) permettant de recevoir au moins un message d'accès (ZN) transmis au moyen d'un signal électromagnétique (EMS) et émis par un jeton (TOK) ;
d) une unité d'autorisation (AE) permettant de générer un signal de commutation (SSIG) si une vérification du message d'accès (ZN) émis par le jeton (TOK) a pour résultat que l'activation de l'appareil est autorisée au moyen du message d'accès (ZN) ; et
e) une unité d'activation (FSE) permettant d'activer une transmission des signaux électriques (ESIG) de la première unité de réception (EE1) vers l'unité d'émission (SE) en fonction du signal de commutation (SSIG) généré, dans lequel
- l'unité d'émission (SE) est reliée à l'unité de calcul (RE) par l'intermédiaire d'un câble électriquement conducteur (KA2) supplémentaire afin d'émettre les signaux électriques (ESIG), et
- le dispositif (VOR) présente également le câble (KA2) supplémentaire, qui est relié de manière indissociable au dispositif (VOR).

2. Dispositif (VOR) selon la revendication 1,
**caractérisé en ce que**
la au moins une unité de commande (BE) est réalisée sous forme de clavier ou de souris.

3. Dispositif (VOR) selon les revendications 1 et 2,
**caractérisé en ce que**
le dispositif (VOR) est agencé au moins partiellement à l'intérieur d'une enveloppe (H) et l'unité de calcul (RE) est agencée à l'intérieur de l'enveloppe (H).

4. Dispositif (VOR) selon l'une quelconque des revendications 1 à 3,
**caractérisé en ce que**
le dispositif (VOR) est agencé au moins partiellement à l'intérieur de la au moins une unité de commande (BE).

5. Dispositif (VOR) selon l'une quelconque des revendications précédentes 1 à 4,
**caractérisé en ce que** le jeton (TOK) est réalisé de telle manière qu'il ne devient actif que lorsqu'il est amené à proximité du dispositif (VOR).

6. Dispositif (VOR) selon la revendication 5,
**caractérisé en ce que** le jeton (TOK) est conçu afin d'envoyer le message d'accès (ZN) sous la forme d'un signal RFID.
